Europäisches Patentamt / European Patent Office / Office européen des brevets

(11) **EP 3 105 962 B1**

(12) **EUROPEAN PATENT SPECIFICATION**

(45) Date of publication and mention
of the grant of the patent:
**29.11.2017 Bulletin 2017/48**

(51) Int Cl.:
***H04W 36/00*** (2009.01)

(21) Application number: **15705170.7**

(22) Date of filing: **03.02.2015**

(86) International application number:
**PCT/US2015/014233**

(87) International publication number:
**WO 2015/123051 (20.08.2015 Gazette 2015/33)**

(54) **PRUNING A CELL IN CELLULAR WIRELESS COMMUNICATIONS**

BESCHNEIDUNG EINER ZELLE IN ZELLULAREN DRAHTLOSEN KOMMUNIKATIONEN

ÉLAGAGE DE CELLULE DANS DES COMMUNICATIONS SANS FIL CELLULAIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.02.2014 US 201461939065 P
25.06.2014 US 201414315013**

(43) Date of publication of application:
**21.12.2016 Bulletin 2016/51**

(73) Proprietor: **Qualcomm Incorporated
San Diego, CA 92121-1714 (US)**

(72) Inventors:
• **RATTNER, Zachary David
San Diego, California 92121-1714 (US)**
• **NARULA, Mohit
San Diego, California 92121-1714 (US)**
• **SU, Yi
San Diego, California 92121-1714 (US)**

• **JAYAPRAKASH, Karthik
San Diego, California 92121-1714 (US)**

(74) Representative: **Dunlop, Hugh Christopher et al
Maucher Jenkins
26 Caxton Street
London SW1H 0RJ (GB)**

(56) References cited:
**WO-A1-2013/113355          US-A1- 2010 234 014
US-A1- 2013 258 913          US-A1- 2014 029 483**

• **NOKIA ET AL: "Rel'8 VoIP Mobility Performance
in Manhattan Environment", 3GPP DRAFT;
R1-092093, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, no. San
Francisco, USA; 20090430, 30 April 2009
(2009-04-30), XP050339543, [retrieved on
2009-04-30]**

**Description**

**BACKGROUND**

Aspects of the present disclosure relate generally to wireless communication systems, and more particularly, to techniques for pruning spurious cells in cellular environments. Spurious cells are undesirable attributes in wireless communication systems that occur when a searcher component of a user equipment detects a cell with strong signal strength that does not actually exist. There are various reasons why a spurious cell might be detected, such as interference from another genuine cell, multipath scenarios, or other poor RF conditions.

Wireless communication networks are widely deployed to provide various communication services such as telephony, video, data, messaging, broadcasts, and so on. Such networks, which are usually multiple access networks, support communications for multiple users by sharing the available network resources. One example of such a network is the UMTS Terrestrial Radio Access Network (UTRAN). The UTRAN is the radio access network (RAN) defined as a part of the Universal Mobile Telecommunications System (UMTS), a third generation (3G) mobile phone technology supported by the 3rd Generation Partnership Project (3GPP). The UMTS, which is the successor to Global System for Mobile Communications (GSM) technologies, currently supports various air interface standards, such as Wideband-Code Division Multiple Access (W-CDMA), Time Division-Code Division Multiple Access (TD-CDMA), and Time Division-Synchronous Code Division Multiple Access (TD-SCDMA). The UMTS also supports enhanced 3G data communications protocols, such as High Speed Packet Access (HSPA), which provides higher data transfer speeds and capacity to associated UMTS networks.

US 2014 029483 A1 relates to a method and apparatus for time division duplexing (TDD) virtual cell selection.

US 2013/258913 A1 relates to time division duplex (TDD) pipeline processing.

As the demand for mobile broadband access continues to increase, research and development continue to advance the UMTS technologies not only to meet the growing demand for mobile broadband access, but to advance and enhance the user experience with mobile communications.

**SUMMARY**

Techniques for pruning a spurious cell are provided for a user equipment (UE). Based in part on transmission gap pattern sequence (TGPS) information received from a serving cell of the UE, the UE determines a search period for cells in a database different from the serving cell. Cells can be on the same frequency as the serving cell (intra-frequency), same radio access technology (RAT) but different frequency from the serving cell (intra-frequency), or a different RAT (inter-RAT) from the serving cell. Also, the network may specify a plurality of measurement reporting events with potentially varying time-to-trigger (TTT) associated with each event. Since the network may configure multiple events each with a different TTT, a smallest measurement reporting event TTT can be determined. Based at least in part on the search period and the smallest measurement reporting event TTT associated with a candidate cell, a cell age pruning threshold for the candidate cell can be determined.

In one aspect, the present disclosure provides a method of wireless communication for a UE. At the UE, based at least in part on TGPS information received from a serving cell of the UE, a search period for measurement events for cells in a database different from the serving cell is determined. From the cells in the database, a candidate cell is selected. At the UE, a smallest measurement reporting event TTT among a plurality of measurement reporting event TTTs associated with the candidate cell in the measurement database is determined. A cell age pruning threshold is adaptively determined based at least in part on the search period and the smallest measurement reporting event TTT, where the cell age pruning threshold is a maximum number of consecutive searches within which the candidate cell should have been detected (i.e., searcher was tuned to the appropriate frequency) but was not detected by the UE, wherein the candidate cell is removed from the database in the UE when the cell age pruning threshold for the candidate cell has been reached.

Another aspect of the present disclosure provides an apparatus for wireless communications. The apparatus includes means for determining, at a UE, a search period for measurement events for cells in a database different from a serving cell of the UE, based at least in part on TGPS information received from the serving cell. The apparatus includes means for selecting a candidate cell from the cells in the database in the UE. The apparatus further includes means for determining, at the UE, a smallest measurement reporting event TTT among a plurality of measurement reporting event TTTs associated with the candidate cell in the database. The apparatus further includes means for adaptively determining, at the UE, a cell age pruning threshold based at least in part on the search period and the smallest measurement reporting event TTT associated with the candidate cell, where the cell age pruning threshold is a maximum number of consecutive searches within which the candidate cell should have been detected (i.e., searcher was tuned to the appropriate frequency) but was not detected by the UE, wherein the apparatus further included means for removing the candidate cell from the database in the UE when the cell age pruning threshold for the candidate cell has been reached.

Still another aspect of the present disclosure provides a computer readable medium storing computer executable code for wireless communication. The computer readable medium comprises code for causing a processor to determine a search period for measurement events for cells in a database different from a serving cell of a UE, based at least in part on TGPS information received from the serving cell, and select a candidate cell from the cells in the database in the UE. The computer readable medium further comprises code for causing the processor to determine a smallest measurement reporting event TTT among a plurality of measurement reporting event TTTs associated with the candidate cell in the database. The computer readable medium further comprises code for causing the processor to adaptively determine a cell age pruning threshold for the candidate cell based at least in part on the search period and the smallest measurement reporting event TTT associated with the candidate cell, where the cell age pruning threshold is a maximum number of consecutive searches within which the candidate cell should have been detected (i.e., searcher was tuned to the appropriate frequency) but was not detected by the UE, wherein the computer readable medium further comprises code for causing the processor to remove the candidate cell from the database in the UE, when the cell age pruning threshold for the candidate cell has been reached.

These and other aspects of the present disclosure will become more fully understood upon a review of the detailed description, which follows.

## BRIEF DESCRIPTION OF THE DRAWINGS

FIG. 1 is a conceptual diagram illustrating an apparatus for wireless communication in accordance with the present disclosure.

FIG. 2 is a high level flowchart in accordance with an aspect of the present disclosure.

FIG. 3 is an example graph of cell quality of a candidate cell in accordance with the present disclosure.

FIG. 4 is a block diagram conceptually illustrating an example of a telecommunications system.

FIG. 5 is a block diagram illustrating an example of an access network.

FIG. 6 is a block diagram illustrating an example of a hardware implementation for an apparatus in accordance with the present disclosure.

FIG. 7 is a conceptual diagram illustrating an example of a radio protocol architecture relating to a user plane and control plane.

FIG. 8 is a block diagram conceptually illustrating an example of a Node B in communication with a UE in a telecommunications system.

## DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

In prior art cellular communications networks including a Wideband Code Division Multiple Access (WCDMA) network, a user equipment (UE) monitors and performs various signal quality measurements relating to one or more neighboring cells of a serving cell. However, in WCDMA connected mode including Dedicated Channel (DCH) state or cell Forward Access Channel (FACH) state of the UE, the UE cannot search on frequencies other than its serving frequency without the network first configuring the frequency. The network may provide a list of frequencies across different target Radio Access Technologies (RATs) and frequencies to the UE in a downlink message (e.g., via Measurement Control Message (MCM) or System Information Block (SIB)). The network can command and/or configure the UE to take any of five types of measurement: intra-frequency measurements, inter-frequency measurements, inter-RAT measurements, traffic volume measurements, UE internal measurements, quality measurements, and UE positioning measurements.

Although the present disclosure provides example techniques in connection with the DCH state of the UE, the present disclosure can be applied to any state that has event reporting (e.g., DCH, FACH, etc.). For illustration purposes, however, the present disclosure provided herein describes the techniques and methodologies in connection with the DCH state of the UE.

In the prior art the DCH state of the UE, along with the list of frequencies to be searched and measured, the network also sends information relating to a compressed mode, such as a compressed mode gap pattern for the UE. The compressed mode means that transmission and reception are halted for a short time in order for the UE to perform measurements on other frequencies. This information including the compressed mode gap pattern for the UE can be provided via various downlink messages, such as Radio Bearer Setup (Rb Setup), MCM, Physical Channel Reconfiguration, Transport Channel Reconfiguration, cell update confirm messages, etc. By decoding this information sent from the network, the UE can determine or calculate gap instances or search periods to perform the measurements. Further, 3GPP TS 25.331 § 14.3.1, which is incorporated herein by reference, provides that a UE should continuously measure Inter-RAT or Inter-frequency or Intra-frequency cells and report predetermined events (e.g., Events 3A-3D for Inter-RAT measurements) to the network. The predetermined events are defined per base station scrambling code and are calculated based on results from cell quality (e.g., reference signal received power (RSRP), reference signal received quality (RSRQ), etc.) when compared with predetermined thresholds.

For example, in a prior art MCM message for measurement reporting events (Event 1x/2x/3x), the network may specify a minimum time for which event criteria must be met before the measurement reports are sent by the UE to the network. The minimum time is known as the time-to-trigger (TTT) and may be set to zero milliseconds. Here, Event 1x includes Event 1A-1I for intra-frequency reporting events, as specified in 3GPP TS 25.331 § 14.1; Event 2x includes Event 2A-3F for inter-frequency reporting events, as specified in 3GPP TS 25.331 § 14.2.1; and Event 3x includes Event 3A-3D for inter-RAT reporting events, as specified in 3GPP TS 25.331 § 14.3.1. That is, before measurement reports are generated and reported by the UE to the network, certain conditions must exist for a time duration greater than or equal to the TTT. As noted above, the standards provide requirements for various events, including Events 1A-1I for intra-frequency reporting events, Events 2A-2F for Inter-frequency reporting events, and Events 3A-3D for Inter-RAT reporting events.

Further, Event 1x/2x/3x MCMs manage intra-frequency, inter-frequency, or inter-RAT handover, e.g., a handover from WCDMA to WCDMA, GSM, or LTE. Also, by the standards implementation, the UE is to continuously measure inter-frequency, intra-frequency, and/or inter-RAT neighbor cells, and send a corresponding Measurement Report Message (MRM) when the specified standard requirements have been met for an entire time period of a TTT. This means that the network has to specify reasonable parameters for Event 1x/2x/3x, such as frequency indicators, thresholds, hysteresis, TTT, and cell individual offsets (CIOs) such that each report sent to the network can be influential in making a handover decision. The selection of Event 1x/2x/3x parameters is a delicate process because the UE can drop calls if the UE does not report events in a timely manner, and premature handovers can degrade data throughput. This is especially true in situations involving inter-RAT handovers. Inter-RAT handovers can be hard or soft handover. In a case of hard handover, the UE's existing connection with the serving cell may be broken before making a new connection with the inter-RAT cell or "redirected to the inter-RAT cell as per the standard implementation. So, when the connection is broken, there may be some time where the UE may be temporarily not connected to any cell, which may be detrimental to data throughput. Further, if the target cell in a handover is spurious, acquisition on the cell will fail and as a result the UE must attempt to re-acquire back on the original cell. However, this reacquisition may also fail and thus the UE will drop the call in such a case.

To deal with a situation involving a spurious cell, there exist many techniques including a spurious cell pruning technique with a cell age pruning threshold. The cell age pruning threshold is a fixed parameter that is set by the UE.
However, when the network configures a TTT which is less than a total time to prune, which can be determined by the cell age pruning threshold multiplied by a search period, the spurious cell pruning technique or methodology will not have enough time to run before the UE is expected to report the event to the network. By way of example, an LTE searcher of the UE is designed in such a way to minimize the probability of detecting a spurious cell. Here, a spurious cell may be determined as or represents, for example, a cell that the searcher of the UE finds or identifies as having a strong RSRP or RSRQ, but does not truly exist due to signal noise, multipath, interference, or some other poor radio frequency (RF) condition.
In other words, a spurious cell can be any cell that shows up in search results but does not exist in reality. In an aspect, a spurious cell can be detected by using an iterative cell search technique. That is, a cell can be determined as a spurious cell if the cell should have been detected by the UE during a predetermined number of searches but was not detected by the UE. The RSRP and RSRQ are measurement information of signal strength of an LTE cell to help ranking between different cells as input for handover and cell reselection decisions. However, it may not be possible to guarantee a 0% chance of detecting a spurious cell. This phenomenon occurs because the searcher and demodulator components of the UE or other cellular modems are often separate entities. That is, the searcher of the UE performs cell energy measurements, but does not decode received data. Generally, a cell is not known to be genuine until actual data has been demodulated from it; that is, searcher alone cannot guarantee that a detected cell is real. As a result, the searcher of the UE may detect spurious cells due to various conditions including radio interference. As noted earlier, the spurious cells can significantly reduce data throughput and risks dropping an existing call if the expected handover takes too long before failing, since the UE can signal to the network that it should handover to a cell which is spurious. So, it is desirable to detect when a measured cell (or a candidate cell) is spurious and, if it is a spurious cell, prune it (e.g., remove it from consideration) as soon as possible. With a very small TTT, compared to a search period, however, it may be very difficult for a UE to prune out spurious cells, since the TTT will expire before the UE gets a chance to complete its pruning algorithm or process.

In the present disclosure, "pruning" occurs when an age of a cell reaches a predetermined threshold (herein referred to as a cell age pruning threshold). The age of a cell can be determined as a number of consecutive searches during which the cell should have been detected, but has not been detected. That is, given a candidate cell, the cell age pruning threshold is a maximum number of consecutive searches during which the candidate cell should have been detected but was not detected by the searcher of the UE. The UE keeps track of the cell age and determines whether the cell age pruning threshold has been reached.

As noted earlier, in the existing technologies, a cell age pruning threshold is a fixed parameter on the UE. That is, the cell age pruning threshold is a constant integer value, which defines the maximum number of consecutive searches that a particular inter-RAT (e.g., WCDMA, LTE or GSM) cell should have been detected but was not detected by the UE. As a result, when the cell age pruning threshold for a candidate cell is reached, the UE determines that the candidate cell is a spurious cell and subsequently removes the candidate cell from its database (or a list of cells) for ongoing measurement report evaluations. The removal of the cell from the database of the UE indicates that the cell is no longer searched or considered for event report evaluation by the UE. That is, a spurious cell is removed before the UE reports events about the cell to the network. The present technologies disclosed herein provide further improved techniques for pruning spurious cells in various telecommunication technologies including WCDMA, LTE, GSM, etc.

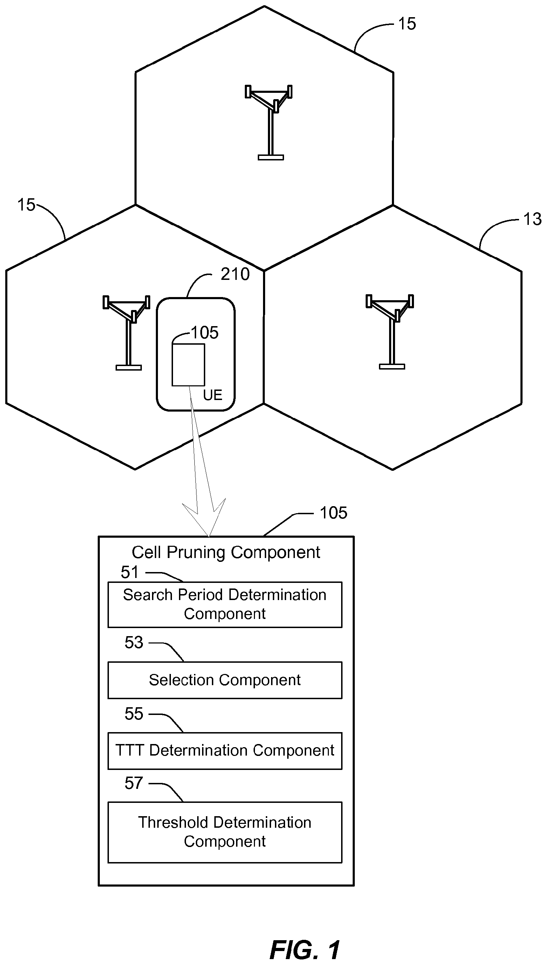

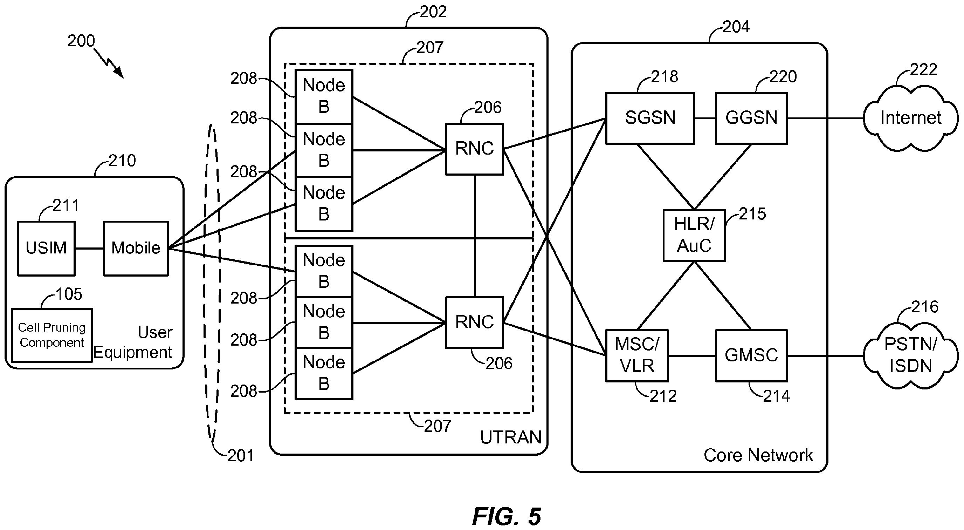

FIG. 1 is a conceptual diagram illustrating wireless communications between the UE 210 and a cell 11 (or one of the Node Bs 208 in FIG. 5). In one configuration, as shown in FIG. 1, the UE 210 for wireless communication includes means for implementing various aspects of the present disclosure. The UE 210 includes a cell pruning component 105, which includes various components or means for implementing functions relating to aspects of the present disclosure. Also, FIG. 1 shows the cell pruning component 105 as part of the UE 210 (e.g., a part of a modem component of the UE 210). As shown in FIG. 1, the cell pruning component 105 may include a search period determination component 51, a selection component 53, a TTT determination component 55, and a threshold determination component 57. The search period determination component 51 is a component or means for determining, at the UE, a search period for measurement events for cells in a database (or a list) different from a serving cell of the UE, based in part on transmission gap pattern sequence (TGPS) information received from the serving cell. The selection component 53 is a component or means for selecting a candidate cell from the cells in the database of the UE 210. The cells in the database include one or more of neighboring cells of the UE for evaluating various events for measurement reports to the network. The TTT determination component 55 is a component or means for determining, at the UE, a smallest measurement reporting event TTT among a plurality of measurement reporting event TTTs associated with the candidate cell in the database. The threshold determination component 57 is a component or means for determining a cell age pruning threshold for the candidate cell, in accordance with certain aspects of the present disclosure.

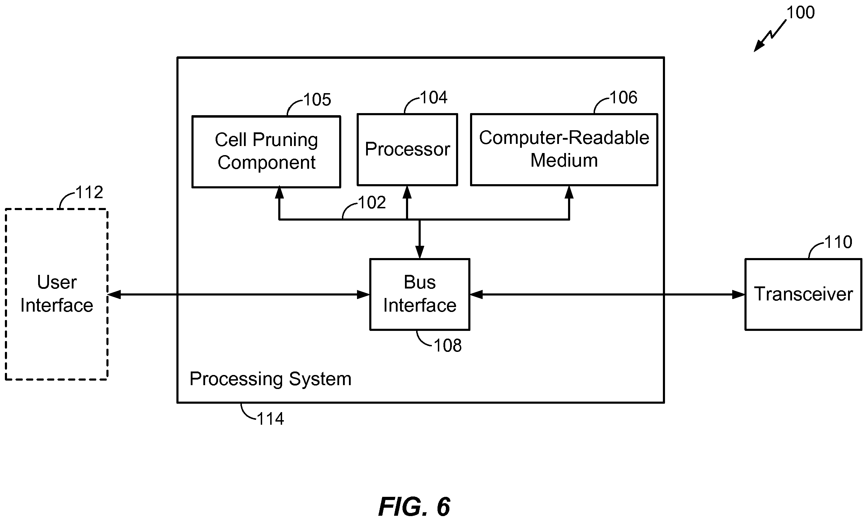

In one aspect, the aforementioned component or means may be implemented by one or more processors (e.g., processor(s) 104 shown in FIG. 6). In another aspect, the aforementioned component or means may be a module, component, or any apparatus configured to perform various functions recited by the aforementioned means. In another aspect, the aforementioned component or means may be a combination of hardware and software components.

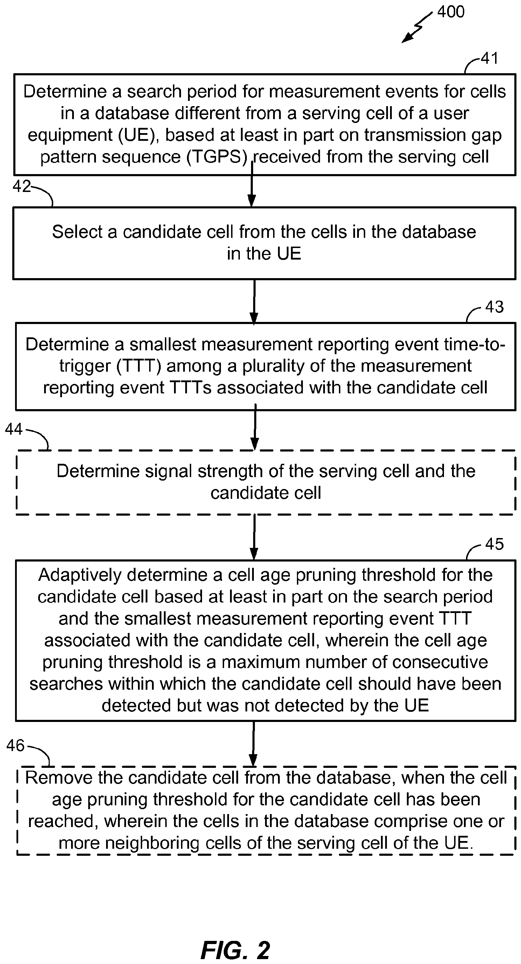

FIG. 2 illustrates an example of a high level flowchart (e.g., 400) in accordance with an aspect of the present disclosure. At block 41, the UE 210 (e.g., the search period determination component 51) determines a search period for measurement events for cells in a database (or a list) different from a serving cell of the UE 210. The search period is determined based at least in part on transmission gap pattern sequence (TGPS) information received in a downlink from the serving cell. The database or the list includes one or more neighboring cells of the serving cell of the UE.

At block 42, the UE (e.g., the selection component 53) selects a candidate cell from the cells in the database for reporting events in the UE 210. At block 43, the UE 210 (e.g., the TTT determination component 55) determines a smallest measurement reporting event TTT among a plurality of measurement reporting event TTTs associated with the candidate cell. For example, the plurality of measurement reporting event TTTs include Event 1x/2x/3x TTTs. By way of example, Event 1x TTTs include Event 1A-1I TTTs for intra-frequency reporting events, Event 2x TTTs include Event 2A-2F for inter-frequency reporting events, Event 3x TTTs include Event 3A-3D TTTs for inter-RAT reporting events, as specified in 3GPP TS 25.331 § 14.1.1, § 14.2.1, § 14.3.1, respectively.

At block 44, optionally, the UE 210 may determine signal strength of the serving cell and the candidate cell. In one implementation, for example, the UE 210 may determine signal strength of a serving WCDMA cell (e.g., path loss, RSRP, $Ec/I_0$, etc.) and signal strength of a candidate LTE (e.g., RSRP, RSRQ, etc.) or GSM cell (e.g., RSSI) and use the information as a factor to determine the cell age pruning threshold.

At block 45, the UE 210 (e.g., the threshold determination component 57) computes or determines a cell age pruning threshold for the candidate cell, based on the search period and the smallest measurement reporting event TTT associated with the candidate cell. It is noted herein that the cell age pruning threshold may refer to a maximum number of consecutive searches during which the candidate cell should have been detected but was not detected by the UE.

At block 46, optionally, when the cell age pruning threshold for the candidate cell has been reached, the UE 210 (e.g., the threshold determination component 57) removes the candidate cell from the database, which includes the one or more neighboring cells of the serving cell of the UE for measurement events reporting. That is, when the cell age pruning threshold for the candidate cell has been reached, the UE determines that the candidate cell is spurious for measurement events reporting purposes, and for subsequent operation such as handoffs. As a result, the candidate cell is no longer searched or considered by the UE 210 for measurement events reporting.

In the present disclosure, the cell age pruning threshold for the candidate cell is determined adaptively based in part on parameters including a search interval (in milliseconds) and TTT. Specifically, the cell age pruning threshold is determined based at least in part on the search interval or period and the minimum TTT of all of the TTTs for configured Measurement Reporting Events (e.g., for inter-RAT reporting events, Events 3A-3D TTTs). The search period and the TTT values are specified in 3GPP TS 25.331 § 8.6.6.15 and 3GPP TS 25.331 § 10.3.7.64, respectively. It is noted that although the present disclosure provides example techniques and methodology with respect to inter-RAT reporting events, similar techniques and methodology can be extended to other measurement reporting events for inter-frequency and intra-frequency measurement reporting events.

In an aspect of the present disclosure, by way of example, the cell age pruning threshold for a candidate cell can be adaptively determined according to the following expression (1):

$$\text{Cell age pruning threshold} =$$

$$\min\{\text{max\_threshold}, \max\{\text{min\_threshold}, \text{ceil}\left(\frac{\min\{event\ x\ TTTs\}}{detection\ periodicity}\right)\}\} \quad (1)$$

where min {N, M} is the least of N and M, max {N, M} is the greatest of N and M, ceil (N) is the nearest integer value greater than or equal to N, and event x TTTs include Event 1x TTTs, Event 2x TTTs, or Event 3x TTTs, detection periodicity is a search period, and N and M are numerical values, and max_threshold and min_threshold are integer parameters for maximum and minimum threshold values for the cell age pruning threshold. In one implementation, the max_threshold may be set to 6 and min_threshold may be set to 2, and Event 3x TTTs are used for Event x TTTs. In such a case, min {event x TTTs} is equal to minimum of Event 3A TTT, Event 3B TTT, Event 3C TTT, and Event 3D TTT. When adaptively determined, the cell age pruning threshold may be referred to as a variable or adaptable cell age pruning threshold.

Further, it is noted that the expression (1) has a resulting effect of reducing or increasing the cell age pruning threshold based on the minimum TTT determined. That is, when the minimum TTT (e.g., 640 ms) is shorter than a total time to prune a cell (e.g., 1000 ms), the cell age pruning threshold is reduced, and when the minimum TTT (e.g., 640 ms) is longer than the total time to prune the cell (e.g., 500 ms), the cell age pruning threshold is increased.

Alternatively, in addition to the expression (1) above, signal strength of the serving cell (e.g., a WCDMA cell) and other candidate cells (e.g., inter-RAT cells such as WCDMA, LTE, and GSM cells) can be used to tweak or adjust determination of the cell age pruning threshold. Also, in other aspects, in place or in combination with signal strength of the serving cell, other parameters such as a number of neighboring cells, serving cell energy, and serving cell throughput. can be used to determine the cell age pruning threshold. For a parameter such as the number of neighboring cells, the more cells there are available, the more likely it is that one of them may be spurious. For a parameter such as serving cell energy, the stronger the serving cell is, the less desperate the UE is to find a replacement cell. For a parameter such as serving cell throughput, data bits per second, instead of the signal strength, can be monitored or used to determine the cell age pruning threshold.

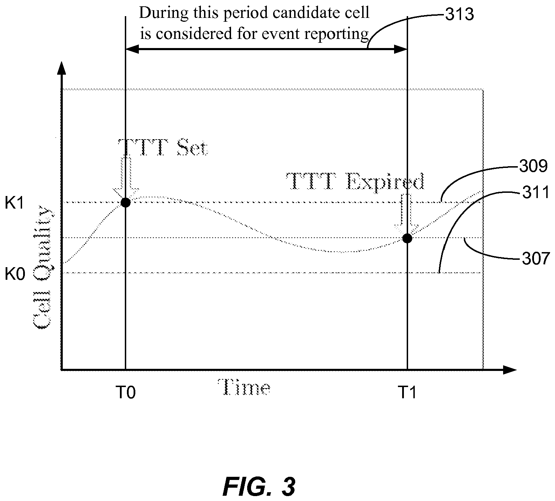

To further illustrate certain aspects of the present disclosure, consider for example a case for Inter-RAT measurements (e.g., for handoffs from a WCDMA cell to a neighboring LTE cell). For this purpose, an example of measurement reporting Event 3C is used. Event 3C means that estimated quality of a cell in another RAT is above a certain threshold, as described in 3GPP TS 25.331 § 14.3.1.3. FIG. 3 illustrates an example graph showing cell quality (e.g., signal strength in dBm) of a candidate cell over a period of time (e.g., in milliseconds). When the UE 210 signals Event 3C to the network for a particular cell, it means that the energy of the particular cell has met or exceeded the required threshold for a specified amount of time.

In FIG. 3, a solid line 307 represents a cell energy threshold as defined by the network, and dashed lines 309 and 311 represent a hysteresis window defined by a hysteresis parameter provided by the network. As the UE 210 measures the signal strength of a candidate cell, a timer for Event 3C associated with the candidate cell (e.g., Event 3C TTT) is set (or gets started) when the Event 3C reporting condition is first satisfied at T0; that is, when the candidate cell's energy meets or exceeds the threshold plus half the hysteresis window size at K1. For each subsequent measurement by the UE 210, the Event 3C TTT remains set until one of two conditions occurs: (i) the Event 3C TTT timer expires at T1; and (ii) the candidate cell's energy dips below the threshold minus half the hysteresis K0. When the condition (i) occurs (e.g., the Event 3C TTT expires), the UE 210 reports Event 3C to the network via a Measurement Report message. When the condition (ii) occurs, the UE 210 resets or clears the Event 3C TTT timer and stops evaluating the candidate cell for Event 3C reporting. In this case, the UE 210 may not restart Event 3C evaluation unless a future measurement occurs where the candidate cell's energy meets the threshold plus half the hysteresis widow at K1.

Referring back to FIG. 3, the candidate cell is considered for measurement event reporting during a time period 313 (e.g., the TTT duration from T0 to T1) by the UE 210. That is, the candidate cell is being considered for event reporting by the UE 210 during the time duration 313. In the case shown in FIG. 3, since the conditions for Event 3C has been satisfied until the Event 3C TTT expires (e.g., the signal quality remained within the predefined window range or hysteresis box), the UE 210 reports Event 3C to the network for the candidate cell.

As noted earlier, TTT and search period are set by the network. Note here that the TTT value is a minimum time parameter for evaluating events. That is, events need to be evaluated based on measurements spanning no less than the TTT value. When the TTT value is less than the search period (e.g., the TTT is 80 ms and search period is 200 ms), the UE will take more time than the TTT value to evaluate the event(s). Further, when the TTT value is not an integral multiple of the search period, the UE will take more time than the TTT value to evaluate the event(s).

To further illustrate certain aspects of the present disclosure, additional illustrative examples are provided below. Specifically, in an aspect of the present disclosure, use of a cell age pruning threshold, as determined in accordance with the expression (1) above, results in improved performance for detecting and pruning spurious cells over conventional techniques.

For the purpose of illustration, it is assumed that the UE need to evaluate an LTE cell for inter-RAT measurement event reporting and the LTE cell is spurious. First, it is assumed that the UE searches on a specific LTE frequency every 100 ms (e.g., a search period is 100 ms), the TTT for Event 3C is set to 640 ms (e.g., Event 3C TTT is 640 ms), and the cell age pruning threshold is set to 5 (this is referred to as Case 1 below). It is noted that conventionally, the cell age threshold is configured by the network to be a constant, fixed value in the UE. For example, for LTE Frequency Division Duplexing (FDD) FARFCNs, the cell age threshold value is set to 5 according to system tradeoffs by the network.

In Case 1, it is going to take about 500 ms (= 5 (cell age pruning threshold) x 100 ms (search period)) for the LTE cell to be pruned by the UE, which is before the expiration of the Event 3C TTT value (640 ms). So, the spurious LTE cell can be detected, and thus can be removed from the database for measurement event reporting before the Event 3C TTT expires, which means that the spurious cell pruning method will prevent Event 3C from being reported for this LTE cell.

However, now it is assumed that the search period is changed to 200 ms (which is referred to as Case 2) and Event 3C TTT and cell age pruning threshold remain the same as in Case 1. That is, in Case 2, the UE searches on a specific LTE frequency every 200 ms, the Event 3C TTT is set to 640 ms, and the cell age pruning threshold is set to 5 searches. So, in this case, it will takes 1000 ms (= 5 (cell age pruning threshold) x 200 ms (search period)) for the UE to remove a spurious cell from the database, which is longer than the TTT time duration of 640 ms. However, the UE may report Event 3C after the cell has been measured over a period of only 640 ms, even though the cell is spurious. Consequently, without use of the present disclosure, the UE may report Event 3C for the LTE candidate cell, and as a result the network may initiate a handover to the spurious LTE candidate cell. This is because conventionally the cell age pruning threshold is a fixed, constant value set independently of the search period and the minimum TTT associated with the candidate cell.

In contrast, in an aspect of the present disclosure, the cell age pruning threshold is adaptively determined (e.g., the cell age pruning threshold can be varied in accordance with the expression (1) above) based at least in part on the search period and the minimum TTT associated with the candidate cell. In Case 2, for example, it is further assumed that the minimum TTT among all Event 3C TTTs is 230 ms. Thus, according to the expression (1) above, the cell age pruning threshold can be determined to be 2 (which is a reduced value from the cell age threshold of 5). That is, using the expression (1), the cell age pruning threshold can be determined as min {6, max {2, ceil (230/200)}}, which results in a value of 2. With the cell age pruning threshold of 2, it is now going to take about 400 ms (= 2 (cell age pruning threshold) x 200 ms (search period)) for the UE to remove a spurious cell from the database, which is shorter than Event 3C TTT of 640 ms. Thus, the spurious LTE cell can be detected and removed from the database for measurement events reporting to the network well before handover to the inter-RAT cell.

Further, as described earlier, for WCDMA Event 1x-3x evaluations, the UE can derive the inter-RAT (WCDMA, LTE, or GSM) search period from the TGPS information received from the serving cell of the UE. The UE is also informed of the TTT for each event. By using knowledge of how many searches must meet a certain threshold before the TTT expires, the UE can adapt its cell age pruning threshold and remove any spurious cells accordingly.

For example, according to the expression (1), for Event 3x considerations with longer TTTs, the cell age pruning threshold results in a higher value, thereby reducing the possibility of erroneously removing a valid cell. However, with shorter TTTs, the cell age pruning threshold results in a lower value, e.g., the cell age pruning threshold value is reduced to take effect before the TTT expires. As a result, the probability of successfully pruning a cell can become a function of both TTT and cell age pruning threshold used.

Further, alternatively, in another aspect of the present disclosure, the probability of successfully pruning a cell may be determined as a function of an available number of measurements. In this case, the cell age pruning threshold can be kept as a constant and the rate by which the measurements are made can be increased. That is, more measurements of a target frequency can be made than what is defined in the current design. This can be accomplished by either shortening a measurement periodicity in time or to take and process independent measurement values from different receiver diversity antennas. In one aspect, the variable can be the number of measurements taken instead of the cell age pruning threshold. For example, let us consider the following scenario: the UE is in a traffic state in WCDMA, enters compressed mode, and finds an LTE cell. It is assumed that Event 3C is configured with a 100 ms TTT and the cell age pruning threshold is set to 5 measurements. In this case, the UE could determine that since the cell age pruning threshold is 5 measurements and the smallest TTT is 100 ms, it needs to change its search period to 100/5 = 20 ms. As a result, the UE can now guarantee that it will have performed 5 searches (the minimum number of searches needed to determine if a cell is spurious) before the smallest TTT expires. Also, in one implementation, the search period could be rounded to the nearest value that the compressed mode gaps can allow for when the TTT is not divisible by the number of measurements.

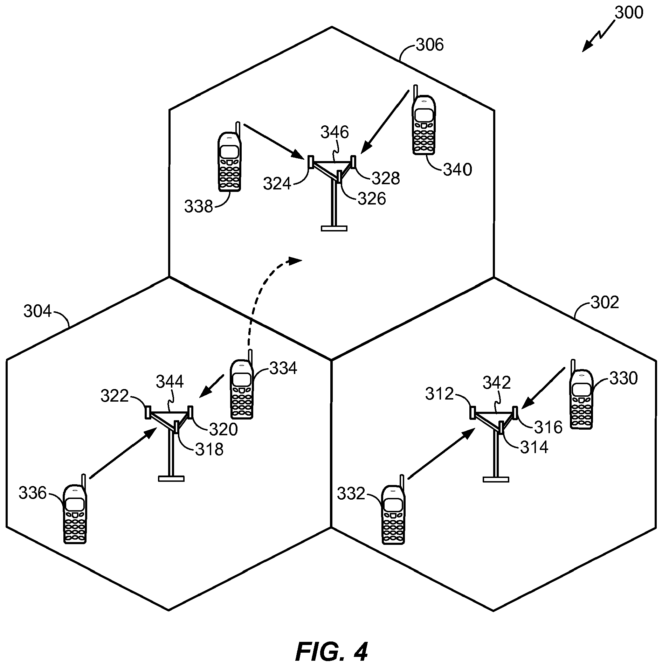

FIG. 4 illustrates an example of an access network. In FIG. 4, by way of example, an access network 300 in a UTRAN architecture is illustrated. The multiple access wireless communication system includes multiple cellular regions (cells), including cells 302, 304, and 306, each of which may include one or more sectors. The multiple sectors can be formed by groups of antennas with each antenna responsible for communication with UEs in a portion of the cell. For example, in cell 302, antenna groups 312, 314, and 316 may each correspond to a different sector. In cell 304, antenna groups 318, 320, and 322 each correspond to a different sector. In cell 306, antenna groups 324, 326, and 328 each correspond to a different sector. The cells 302, 304 and 306 may include several wireless communication devices, e.g., User Equipments (UEs), which may be in communication with one or more sectors of each cell 302, 304, or 306. For example, UEs 330 and 332 may be in communication with Node B 342, UEs 334 and 336 may be in communication with Node B 344, and UEs 338 and 340 can be in communication with Node B 346. Here, each Node B 342, 344, 346 is configured to provide an access point to a CN 204 (see FIG. 5) for all the UEs 330, 332, 334, 336, 338, and 340 in the respective cells 302, 304, and 306. One or more of the UEs in FIG. 4 may be examples of the UE 210 and may include a cell pruning component 105 (see e.g., FIG, 1).

The UE 334 maintains a list of allowed public land mobile network (PLMN) types. As the UE 334 moves from a cellular coverage area to another cellular coverage area (e.g., from the cell 304 to the cell 306), the UE 334 performs various operations including cell selection and/or reselection processes, as described in 3GPP TS 25.304 and 3GPP TS 36.304. When in idle mode, the UE 334 is camped on a call to get access to services, e.g., limited service (emergency calls on an acceptable cell), normal services (for public use on a suitable cell), and operator service (for operators only on a reserved cell). The cells are categorized according to which services they offer: acceptable cell, suitable cell, barred cell, and reserved cell. For example, an "acceptable cell" is a cell on which the UE 334 may camp to obtain limited service (originate emergency calls). A "suitable cell" is a cell on which the UE 334 may camp on to obtain normal services. The cell is part of either the selected PLMN, or the registered PLMN, or a PLMN of the equivalent PLMN list according to the latest information provided by a network. A cell is barred if it is so indicated in the system information in a broadcast message from the network. A cell is reserved if it is so indicted in the system information in a broadcast message from the network.

Further, as the UE 334 moves from the illustrated location in cell 304 into cell 306, a serving cell change (SCC) or handover may occur in which communication with the UE 334 transitions from the cell 304, which may be referred to as a source cell, to the cell 306, which may be referred to as a target cell. Management of the handover procedure may take place at the UE 334, at the Node Bs corresponding to the respective cells, at a radio network controller 206 (see FIG. 5), or at another suitable node in the wireless network. For example, during a call with the source cell 304, or at any other time, the UE 334 may monitor various parameters of the source cell 304 as well as various parameters of neighboring cells such as cells 306 and 302. Further, depending on the quality of these parameters, the UE 334 may maintain communication with one or more of the neighboring cells. During this time, the UE 334 may maintain an Active Set, that is, a list of cells that the UE 334 is simultaneously connected to (i.e., the UTRA cells that are currently assigning a downlink dedicated physical channel DPCH or fractional downlink dedicated physical channel F-DPCH to the UE 334 may constitute the Active Set).

The modulation and multiple access scheme employed by the access network 300 may vary depending on the particular telecommunications standard being deployed. By way of example, the standard may include Evolution-Data Optimized (EV-DO) or Ultra Mobile Broadband (UMB). EV-DO and UMB are air interface standards promulgated by the 3rd Generation Partnership Project 2 (3GPP2) as part of the CDMA2000 family of standards and employs CDMA to provide broadband Internet access to mobile stations or UEs. The standard may alternately be Universal Terrestrial Radio Access (UTRA) employing Wideband-CDMA (W-CDMA) and other variants of CDMA, such as TD-SCDMA; Global System for Mobile Communications (GSM) employing TDMA; and Evolved UTRA (E-UTRA), Ultra Mobile Broadband (UMB), IEEE 802.11 (Wi-Fi), IEEE 802.16 (WiMAX), IEEE 802.20, and Flash-OFDM employing OFDMA. UTRA, E-UTRA, UMTS, LTE, LTE Advanced, and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

The radio protocol architecture may take on various forms depending on the particular application. An example for an HSPA system will now be presented with reference to FIG. 5.

The various concepts presented throughout this disclosure may be implemented across a broad variety of telecommunication systems, network architectures, and communication standards. By way of example and without limitation, the aspects of the present disclosure illustrated in FIG. 5 are presented with reference to a UMTS system 200 employing a W-CDMA air interface. A UMTS network includes three interacting domains: a Core Network (CN) 204, a UMTS Terrestrial Radio Access Network (UTRAN) 202, and UE 210 (see, e.g., FIG. 1). In this example, the UTRAN 202 provides various wireless services including telephony, video, data, messaging, broadcasts, and/or other services. The UTRAN 202 may include a plurality of Radio Network Subsystems (RNSs) such as an RNS 207, each controlled by a respective Radio Network Controller (RNC) such as an RNC 206. Here, the UTRAN 202 may include any number of RNCs 206 and RNSs 207 in addition to the RNCs 206 and RNSs 207 illustrated herein. The RNC 206 is an apparatus responsible for, among other things, assigning, reconfiguring and releasing radio resources within the RNS 207. The RNC 206 may be interconnected to other RNCs (not shown) in the UTRAN 202 through various types of interfaces such as a direct physical connection, a virtual network, or the like, using any suitable transport network.

Communication between a UE 210 and a Node B 208 may be considered as including a physical (PHY) layer and a medium access control (MAC) layer. Further, communication between a UE 210 and an RNC 206 by way of a respective Node B 208 may be considered as including a radio resource control (RRC) layer. In the instant specification, the PHY layer may be considered layer 1, the MAC layer may be considered layer 2, and the RRC layer may be considered layer 3. Information herein below utilizes terminology introduced in the RRC Protocol Specification, 3GPP TS 25.331 v9.1.0.

The geographic region covered by the RNS 207 may be divided into a number of cells, with a radio transceiver apparatus serving each cell. A radio transceiver apparatus is commonly referred to as a Node B in UMTS applications, but may also be referred to by those skilled in the art as a base station (BS), a base transceiver station (BTS), a radio base station, a radio transceiver, a transceiver function, a basic service set (BSS), an extended service set (ESS), an access point (AP), or some other suitable terminology. For clarity, three Node Bs 208 are shown in each RNS 207; however, the RNSs 207 may include any number of wireless Node Bs. The Node Bs 208 provide wireless access points to a CN 204 for any number of mobile apparatuses. Examples of a mobile apparatus include a cellular phone, a smart phone, a session initiation protocol (SIP) phone, a laptop, a notebook, a netbook, a smartbook, a personal digital assistant (PDA), a satellite radio, a global positioning system (GPS) device, a multimedia device, a video device, a digital audio player (e.g., MP3 player), a camera, a game console, or any other similar functioning device. The mobile apparatus is commonly referred to as a UE in UMTS applications, but may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a terminal, a user agent, a mobile client, a client, or some other suitable terminology. In a UMTS system, the UE 210 may further include a universal subscriber identity module (USIM) 211, which contains a user's subscription information to a network, and the cell pruning component 105 that may implement various aspects of the present disclosure. The cell pruning component 105 can be implemented as part of a modem processor, or an application processor, or any combination thereof, of the UE 210. For illustrative purposes, one UE 210 is shown in communication with a number of the Node Bs 208. The DL (a downlink channel), also called the forward link, refers to the communication link from a Node B 208 to a UE 210, and the UL (an uplink channel), also called the reverse link, refers to the communication link from a UE 210 to a Node B 208.

The CN 204 interfaces with one or more access networks, such as the UTRAN 202. As shown, the CN 204 is a GSM core network. However, as those skilled in the art will recognize, the various concepts presented throughout this disclosure may be implemented in a RAN, or other suitable access network, to provide UEs with access to types of CNs other than GSM networks.

The CN 204 includes a circuit-switched (CS) domain and a packet-switched (PS) domain. Some of the circuit-switched elements are a Mobile services Switching Centre (MSC), a Visitor location register (VLR) and a Gateway MSC. Packet-switched elements include a Serving GPRS Support Node (SGSN) and a Gateway GPRS Support Node (GGSN). Some network elements, like EIR, HLR, VLR and AuC may be shared by both of the circuit-switched and packet-switched domains. In the illustrated example, the CN 204 supports circuit-switched services with a MSC 212 and a GMSC 214. In some applications, the GMSC 214 may be referred to as a media gateway (MGW). One or more RNCs, such as the RNC 206, may be connected to the MSC 212. The MSC 212 is an apparatus that controls call setup, call routing, and UE mobility functions. The MSC 212 also includes a VLR that contains subscriber-related information for the duration that a UE is in the coverage area of the MSC 212. The GMSC 214 provides a gateway through the MSC 212 for the UE to access a circuit-switched network 216. The GMSC 214 is connected to a home location register (HLR) 215 containing subscriber data, such as the data reflecting the details of the services to which a particular user has subscribed. The HLR is also associated with an authentication center (AuC) that contains subscriber-specific authentication data. When a call is received for a particular UE, the GMSC 214 queries the HLR 215 to determine the UE's location and forwards the call to the particular MSC serving that location.

The CN 204 also supports packet-data services with a serving GPRS support node (SGSN) 218 and a gateway GPRS support node (GGSN) 220. GPRS, which stands for General Packet Radio Service, is designed to provide packet-data services at speeds higher than those available with standard circuit-switched data services. The GGSN 220 provides a connection for the UTRAN 202 to a packet-based network 222. The packet-based network 222 may be the Internet, a private data network, or some other suitable packet-based network. The primary function of the GGSN 220 is to provide the UEs 210 with packet-based network connectivity. Data packets may be transferred between the GGSN 220 and the UEs 210 through the SGSN 218, which performs primarily the same functions in the packet-based domain as the MSC 212 performs in the circuit-switched domain.

An air interface 201 may support various air interfaces depending upon deployed technology. An air interface 201 for UMTS may utilize a spread spectrum Direct-Sequence Code Division Multiple Access (DS-CDMA) system. The spread spectrum DS-CDMA spreads user data through multiplication by a sequence of pseudorandom bits called chips. The "wideband" W-CDMA air interface for UMTS is based on such direct sequence spread spectrum technology and additionally calls for a frequency division duplexing (FDD). FDD uses a different carrier frequency for the UL and DL between a Node B 208 and a UE 210. Another air interface for UMTS that utilizes DS-CDMA, and uses time division duplexing (TDD), is the TD-SCDMA air interface. Those skilled in the art will recognize that although various examples described herein may refer to a W-CDMA air interface, the underlying principles may be equally applicable to a TD-SCDMA air interface.

An HSPA air interface includes a series of enhancements to the 3G/W-CDMA air interface, facilitating greater throughput and reduced latency. Among other modifications over prior releases, HSPA utilizes hybrid automatic repeat request (HARQ), shared channel transmission, and adaptive modulation and coding. The standards that define HSPA include HSDPA (high speed downlink packet access) and HSUPA (high speed uplink packet access, also referred to as enhanced uplink, or EUL).

HSDPA utilizes as its transport channel the high-speed downlink shared channel (HS-DSCH). The HS-DSCH is implemented by three physical channels: the high-speed physical downlink shared channel (HS-PDSCH), the high-speed shared control channel (HS-SCCH), and the high-speed dedicated physical control channel (HS-DPCCH).

Among these physical channels, the HS-DPCCH carries the HARQ ACK/NACK signaling on the uplink to indicate whether a corresponding packet transmission was decoded successfully. That is, with respect to the downlink, the UE 210 provides feedback to the node B 208 over the HS-DPCCH to indicate whether it correctly decoded a packet on the downlink.

HS-DPCCH further includes feedback signaling from the UE 210 to assist the node B 208 in taking the right decision in terms of modulation and coding scheme and precoding weight selection, this feedback signaling including the CQI and PCI.

"HSPA Evolved" or HSPA+ is an evolution of the HSPA standard that includes Multiple Input Multiple Output (MIMO) and 64-QAM, enabling increased throughput and higher performance. That is, in an aspect of the disclosure, the node B 208 and/or the UE 210 may have multiple antennas supporting MIMO technology. The use of MIMO technology enables the node B 208 to exploit the spatial domain to support spatial multiplexing, beamforming, and transmit diversity.

MIMO is a term generally used to refer to multi-antenna technology, that is, multiple transmit antennas (multiple inputs to the channel) and multiple receive antennas (multiple outputs from the channel). MIMO systems generally enhance data transmission performance, enabling diversity gains to reduce multipath fading and increase transmission quality, and spatial multiplexing gains to increase data throughput.

Spatial multiplexing may be used to transmit different streams of data simultaneously on the same frequency. The data steams may be transmitted to a single UE 210 to increase the data rate or to multiple UEs 210 to increase the overall system capacity. This is achieved by spatially precoding each data stream and then transmitting each spatially precoded data stream through a different transmit antenna on the downlink. The spatially precoded data streams arrive at the UE(s) 210 with different spatial signatures, which enables each of the UE(s) 210 to recover the one or more the data streams destined for that UE 210. On the uplink, each UE 210 may transmit one or more spatially precoded data streams, which enables the node B 208 to identify the source of each spatially precoded data stream.

Spatial multiplexing may be used when channel conditions are good. When the channel conditions are less favorable, beamforming may be used to focus transmission energy in one or more directions, or to improve transmission based on characteristics of the channel. This may be achieved by spatially precoding a data stream for transmission through multiple antennas. To achieve good coverage at an edges of a cell, a single stream beamforming transmission may be used in combination with transmit diversity.

Generally, for MIMO systems utilizing n transmit antennas, n transport blocks may be transmitted simultaneously over the same carrier utilizing the same channelization code. Note that different transport blocks sent over the n transmit antennas may have the same or different modulation and coding schemes from one another.

On the other hand, Single Input Multiple Output (SIMO) generally refers to a system utilizing a single transmit antenna (a single input to the channel) and multiple receive antennas (multiple outputs from the channel). Thus, in a SIMO system, a single transport block is sent over the respective carrier.

FIG. 6 is a block diagram illustrating an example of a hardware implementation for an apparatus 100 employing a processing system 114. The apparatus 100 can be any communications device including a UE (e.g., UE 210 of FIG. 1). In this example, the processing system 114 may be implemented with a bus architecture, represented generally by the bus 102. The bus 102 may include any number of interconnecting buses and bridges depending on the specific application of the processing system 114 and the overall design constraints. The bus 102 links together various circuits including one or more processors, represented generally by the processor 104, and computer-readable media, represented generally by the computer-readable medium 106, and the cell pruning component 105. The bus 102 may also link various other circuits such as timing sources, peripherals, voltage regulators, and power management circuits, which are well known in the art, and therefore, will not be described any further. A bus interface 108 provides an interface between the bus 102 and a transceiver 110. The transceiver 110 provides a means for communicating with various other apparatus over a transmission medium. Depending upon the nature of the apparatus, a user interface 112 (e.g., keypad, display, speaker, microphone, joystick) may also be provided.

The processor 104 is responsible for managing the bus 102 and general processing, including execution of software stored on the computer-readable medium 106. The software, when executed by the processor 104, causes the processing system 114 to perform the various functions described infra for any particular apparatus. The computer-readable medium 106 may also be used for storing data and/or instructions that is manipulated by the processor 104 when executing software. Further, the disclosed technology can be performed by the processor 104, cell pruning component 105 or any combination thereof. Further, in one implementation, the cell pruning component 105 can be implemented as part of the transceiver 110 or can be implemented in a distributed computing fashion between the processing system 114 and transceiver 110.

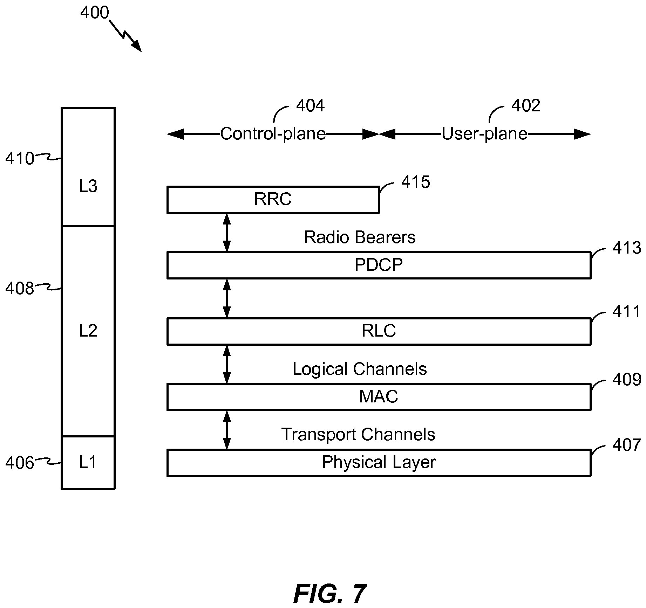

FIG. 7 is an example of a radio protocol architecture 400 relating to the user plane 402 and the control plane 404 of a UE or Node B/base station. For example, architecture 400 may be included in a UE such as the UE 210 (FIG. 1). The radio protocol architecture 400 for the UE and Node B is shown with three layers: Layer 1 406, Layer 2 408, and Layer 3 410. Layer 1 (L1 layer) 406 is the lowest layer and implements various physical layer signal processing functions. As such, Layer 1 406 includes the physical layer 407. Layer 2 (L2 layer) 408 is above the physical layer 407 and is responsible for the link between the UE and Node B over the physical layer 407. Layer 3 (L3 layer) 410 includes a radio resource control (RRC) sublayer 415. The RRC sublayer 415 handles the control plane signaling of Layer 3 between the UE and the UTRAN.

In the user plane, the L2 layer 408 includes a media access control (MAC) sublayer 409, a radio link control (RLC) sublayer 411, and a packet data convergence protocol (PDCP) 413 sublayer, which are terminated at the Node B on the network side. Although not shown, the UE may have several upper layers above the L2 layer 408 including a network layer (e.g., IP layer) that is terminated at a PDN gateway on the network side, and an application layer that is terminated at the other end of the connection (e.g., far end UE, server, etc.).

The PDCP sublayer 413 provides multiplexing between different radio bearers and logical channels. The PDCP sublayer 413 also provides header compression for upper layer data packets to reduce radio transmission overhead, security by ciphering the data packets, and handover support for UEs between Node Bs. The RLC sublayer 411 provides segmentation and reassembly of upper layer data packets, retransmission of lost data packets, and reordering of data packets to compensate for out-of-order reception due to hybrid automatic repeat request (HARQ). The MAC sublayer 409 provides multiplexing between logical and transport channels. The MAC sublayer 409 is also responsible for allocating the various radio resources (e.g., resource blocks) in one cell among the UEs. The MAC sublayer 409 is also responsible for HARQ operations.

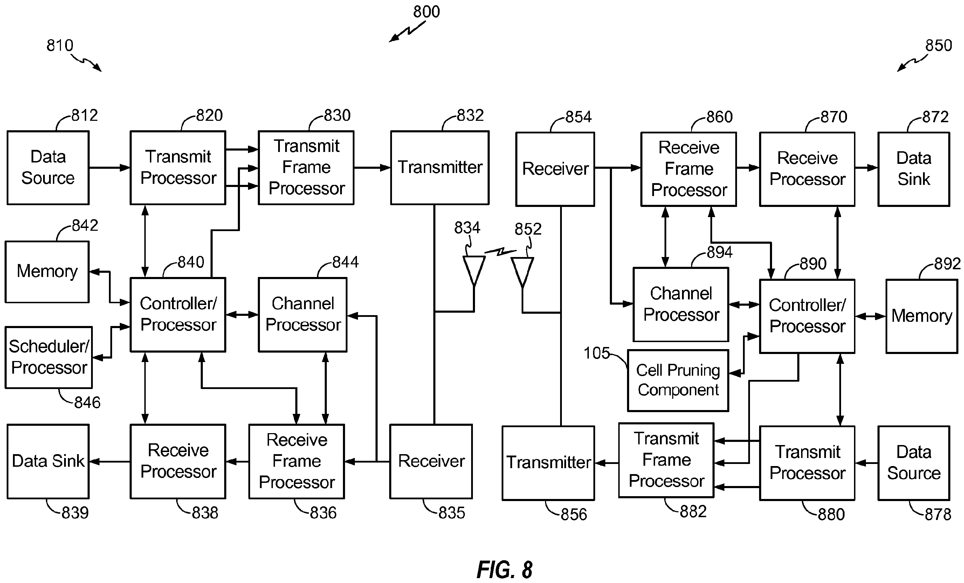

FIG. 8 is a block diagram of a Node B 810 in communication with a UE 850, where the Node B 810 may be an example of the Node B 208 in FIG. 1, and the UE 850 may be an example of the UE 210 in FIG. 1. In the downlink communication, a transmit processor 820 may receive data from a data source 812 and control signals from a controller/processor 840. The transmit processor 820 provides various signal processing functions for the data and control signals, as well as reference signals (e.g., pilot signals). For example, the transmit processor 820 may provide cyclic redundancy check (CRC) codes for error detection, coding and interleaving to facilitate forward error correction (FEC), mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM), and the like), spreading with orthogonal variable spreading factors (OVSF), and multiplying with scrambling codes to produce a series of symbols. Channel estimates from a channel processor 844 may be used by a controller/processor 840 to determine the coding, modulation, spreading, and/or scrambling schemes for the transmit processor 820. These channel estimates may be derived from a reference signal transmitted by the UE 850 or from feedback from the UE 850. The symbols generated by the transmit processor 820 are provided to a transmit frame processor 830 to create a frame structure. The transmit frame processor 830 creates this frame structure by multiplexing the symbols with information from the controller/processor 840, resulting in a series of frames. The frames are then provided to a transmitter 832, which provides various signal conditioning functions including amplifying, filtering, and modulating the frames onto a carrier for downlink transmission over the wireless medium through antenna 834. The antenna 834 may include one or more antennas, for example, including beam steering bidirectional adaptive antenna arrays or other similar beam technologies.

At the UE 850, a receiver 854 receives the downlink transmission through an antenna 852 and processes the transmission to recover the information modulated onto the carrier. The information recovered by the receiver 854 is provided to a receive frame processor 860, which parses each frame, and provides information from the frames to a channel processor 894 and the data, control, and reference signals to a receive processor 870. The receive processor 870 then performs the inverse of the processing performed by the transmit processor 820 in the Node B 810. More specifically, the receive processor 870 descrambles and despreads the symbols, and then determines the most likely signal constellation points transmitted by the Node B 810 based on the modulation scheme. These soft decisions may be based on channel estimates computed by the channel processor 894. The soft decisions are then decoded and deinterleaved to recover the data, control, and reference signals. The CRC codes are then checked to determine whether the frames were successfully decoded. The data carried by the successfully decoded frames will then be provided to a data sink 872, which represents applications running in the UE 850 and/or various user interfaces (e.g., display). Control signals carried by successfully decoded frames will be provided to a controller/processor 890. When frames are unsuccessfully decoded by the receiver processor 870, the controller/processor 890 may also use an acknowledgement (ACK) and/or negative acknowledgement (NACK) protocol to support retransmission requests for those frames. Further, a cell pruning component 105 in the UE 850 is configured to perform various functions described herein relating to pruning spurious cells in reporting event evaluation by the UE 850. In one implementation, the cell pruning component 105 may be implemented as part of the receiver processor 870, controller/processor 890 or any combination thereof.

In the uplink, data from a data source 878 and control signals from the controller/processor 890 are provided to a transmit processor 880. The data source 878 may represent applications running in the UE 850 and various user interfaces (e.g., keyboard). Similar to the functionality described in connection with the downlink transmission by the Node B 810, the transmit processor 880 provides various signal processing functions including CRC codes, coding and interleaving to facilitate FEC, mapping to signal constellations, spreading with OVSFs, and scrambling to produce a series of symbols. Channel estimates, derived by the channel processor 894 from a reference signal transmitted by the Node B 810 or from feedback contained in the midamble transmitted by the Node B 810, may be used to select the appropriate coding, modulation, spreading, and/or scrambling schemes. The symbols produced by the transmit processor 880 will be provided to a transmit frame processor 882 to create a frame structure. The transmit frame processor 882 creates this frame structure by multiplexing the symbols with information from the controller/processor 890, resulting in a series of frames. The frames are then provided to a transmitter 856, which provides various signal conditioning functions including amplification, filtering, and modulating the frames onto a carrier for uplink transmission over the wireless medium through the antenna 852.

The uplink transmission is processed at the Node B 810 in a manner similar to that described in connection with the receiver function at the UE 850. A receiver 835 receives the uplink transmission through the antenna 834 and processes the transmission to recover the information modulated onto the carrier. The information recovered by the receiver 835 is provided to a receive frame processor 836, which parses each frame, and provides information from the frames to the channel processor 844 and the data, control, and reference signals to a receive processor 838. The receive processor 838 performs the inverse of the processing performed by the transmit processor 880 in the UE 850. The data and control signals carried by the successfully decoded frames may then be provided to a data sink 839 and the controller/processor 840, respectively. If some of the frames were unsuccessfully decoded by the receive processor 838, the controller/processor 840 may also use an acknowledgement (ACK) and/or negative acknowledgement (NACK) protocol to support retransmission requests for those frames.

The controller/processors 840 and 890 may be used to direct the operation at the Node B 810 and the UE 850, respectively. For example, the controller/processors 840 and 890 may provide various functions including timing, peripheral interfaces, voltage regulation, power management, TCP transmission control, and other control functions. The computer readable media of memories 842 and 892 may store data and software for the Node B 810 and the UE 850, respectively. A scheduler/processor 846 at the Node B 810 may be used to allocate resources to the UEs and schedule downlink and/or uplink transmissions for the UEs.

Several aspects of a telecommunications system have been presented with reference to a W-CDMA system. As those skilled in the art will readily appreciate, various aspects described throughout this disclosure may be extended to other telecommunication systems, network architectures and communication standards.

By way of example, various aspects may be extended to other UMTS systems such as TD-SCDMA, High Speed Downlink Packet Access (HSDPA), High Speed Uplink Packet Access (HSUPA), High Speed Packet Access Plus (HSPA+) and TD-CDMA. Various aspects may also be extended to systems employing Long Term Evolution (LTE) (in FDD, TDD, or both modes), LTE-Advanced (LTE-A) (in FDD, TDD, or both modes), CDMA2000, Evolution-Data Optimized (EV-DO), Ultra Mobile Broadband (UMB), IEEE 802.11 (Wi-Fi), IEEE 802.16 (WiMAX), IEEE 802.20, Ultra-Wideband (UWB), Bluetooth, and/or other suitable systems. The actual telecommunication standard, network architecture, and/or communication standard employed will depend on the specific application and the overall design constraints imposed on the system.

In accordance with various aspects of the disclosure, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on a computer-readable medium. The computer-readable medium may be a non-transitory computer-readable medium. A non-transitory computer-readable medium includes, by way of example, a magnetic storage device (e.g., hard disk, floppy disk, magnetic strip), an optical disk (e.g., compact disk (CD), digital versatile disk (DVD)), a smart card, a flash memory device (e.g., card, stick, key drive), random access memory (RAM), read only memory (ROM), programmable ROM (PROM), erasable PROM (EPROM), electrically erasable PROM (EEPROM), a register, a removable disk, and any other suitable medium for storing software and/or instructions that may be accessed and read by a computer. The computer-readable medium may also include, by way of example, a carrier wave, a transmission line, and any other suitable medium for transmitting software and/or instructions that may be accessed and read by a computer. The computer-readable medium may be resident in the processing system, external to the processing system, or distributed across multiple entities including the processing system. The computer-readable medium may be embodied in a computer-program product. By way of example, a computer-program product may include a computer-readable medium in packaging materials. Those skilled in the art will recognize how best to implement the described functionality presented throughout this disclosure depending on the particular application and the overall design constraints imposed on the overall system.

It is to be understood that the specific order or hierarchy of steps in the methods disclosed is an illustration of exemplary processes. Based upon design preferences, it is understood that the specific order or hierarchy of steps in the methods may be rearranged. The accompanying method claims present elements of the various steps in a sample order, and are not meant to be limited to the specific order or hierarchy presented unless specifically recited therein.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language of the claims, wherein reference to an element in the singular is not intended to mean "one and only one" unless specifically so stated, but rather "one or more." Unless specifically stated otherwise, the term "some" refers to one or more. A phrase referring to "at least one of' a list of items refers to any combination of those items, including single members. As an example, "at least one of: a, b, or c" is intended to cover: a; b; c; a and b; a and c; b and c; and a, b and c.

**Claims**

1. A method (400) of wireless communications, comprising:

    determining (41), at a user equipment, UE, a search period for measurement events for cells in a database different from a serving cell of the UE, wherein the search period is determined based at least in part on transmission gap pattern sequence, TGPS, information received from the serving cell;
    selecting (42) a candidate cell from the cells in the database in the UE, **characterized by**:

        determining (43), at the UE, a smallest measurement reporting event time-to-trigger, TTT, among a plurality of measurement reporting event TTTs associated with the candidate cell;
        adaptively determining (45) a cell age pruning threshold for the candidate cell based at least in part on the search period and the smallest measurement reporting event TTT associated with the candidate cell, wherein the cell age pruning threshold is a maximum number of consecutive cell searches during which the candidate cell should have been detected by the UE but was not detected by the UE; and
        removing (46) the candidate cell from the database in the UE, when the cell age pruning threshold for the candidate cell has been reached.

2. The method of claim 1, wherein the cells in the database comprise one or more neighboring cells of the serving cell of the UE.

3. The method of claim 1, wherein the cell age pruning threshold is determined according to the following expression:

$$\text{cell age pruning threshold} = \min \{\text{maximum threshold}, \max \{\text{minimum threshold}, \text{ceil} (\min \{\text{event x TTTs}\}/\text{detection periodicity})\}\},$$

where min {N, M} is the least of N and M, max {N, M} is the greatest of N and M, ceil (N) is the nearest integer value greater than or equal to N, and event x TTTs include Event 1x TTTs, Event 2x TTTs, or Event 3x TTTs, detection periodicity is the search period, N and M are numerical values, and maximum threshold and minimum threshold are integer parameters for the cell age pruning threshold.

4. The method of claim 1, wherein the serving cell of the UE is a Wideband Code Division Multiple Access, WCDMA, cell.

5. The method of claim 1, wherein the candidate cell is a WCDMA, a Global System for Mobile communication, GSM, cell, or a Long Term Evolution, LTE, cell.

6. The method of claim 1, wherein the determining of the search period is based in part on a compressed mode gap pattern for the UE.

7. An apparatus (105) for wireless communications, comprising:

means for determining (51), at a user equipment, UE, a search period for measurement events for cells in a database different from a serving cell of the UE, based in part on transmission gap pattern sequence, TGPS, information received from the serving cell;
means for selecting (53) a candidate cell from the cells in the database in the UE, **characterized by**:

means for determining (55), at the UE, a smallest measurement reporting event time-to-trigger, TTT, among a plurality of measurement reporting event TTTs associated with the candidate cell in the database;
means for adaptively determining (57) a cell age pruning threshold for the candidate cell based at least in part on the search period and the smallest measurement reporting event TTT associated with the candidate cell, wherein the cell age pruning threshold is a maximum number of consecutive searches during which the candidate cell should have been detected but was not detected by the UE; and
means for removing the candidate cell from the database in the UE, when the cell age pruning threshold for the candidate cell has been reached.

8. The apparatus of claim 7, , wherein the cells in the database comprise one or more neighboring cells of the serving cell of the UE.

9. The apparatus of claim 7, wherein the cell age pruning threshold is determined according to the following expression:

$$\text{cell age pruning threshold} = \min \{\text{maximum threshold}, \max \{\text{minimum threshold}, \text{ceil} (\min \{\text{event x TTTs}\}/\text{detection periodicity})\}\},$$

where min {N, M} is the least of N and M, max {N, M} is the greatest of N and M, ceil (N) is the nearest integer value greater than or equal to N, and event x TTTs include Event 1x TTTs, Event 2x TTTs, or Event 3x TTTs, detection periodicity is the search period, N and M are numerical values, and maximum threshold and minimum threshold are integer parameters for the cell age pruning threshold.

10. The apparatus of claim 7, wherein the serving cell of the UE is a Wideband Code Division Multiple Access, WCDMA, cell.

11. The apparatus of claim 7, wherein the means for determining the search period is based in part on a compressed mode gap pattern for the UE.

12. A computer readable medium (106) storing computer executable code, comprising:

code for causing a processor (104) to determine a search period for measurement events for cells in a database different from a serving cell of a user equipment, UE, based at least in part on transmission gap pattern sequence, TGPS, information received from the serving cell;
code for causing the processor (104) to select a candidate cell from the cells in the database, **characterized by**:

code for causing the processor (104) to determine a smallest measurement reporting event time-to-trigger, TTT, among a plurality of measurement reporting event TTTs associated with the candidate cell;
code for causing the processor (104) to adaptively determine a cell age pruning threshold for the candidate cell based at least in part on the search period and the smallest measurement reporting event TTT associated with the candidate cell, wherein the cell age pruning threshold is a maximum number of consecutive searches within which the candidate cell should have been detected but was not detected by the UE; and
code for causing the processor (104) to remove the candidate cell from the database in the UE, when the cell age pruning threshold for the candidate cell has been reached.

13. The computer readable medium of claim 12, wherein the cells in the database comprise one or more neighboring cells of the serving cell of the UE.

14. The computer readable medium of claim 12, wherein the cell age pruning threshold is determined according to the following expression:

$$\text{cell age pruning threshold} = \min \{\text{maximum threshold, max } \{\text{minimum threshold, ceil (min } \{\text{event x TTTs}\}/\text{detection periodicity})\}\},$$

where min {N, M} is the least of N and M, max {N, M} is the greatest of N and M, ceil (N) is the nearest integer value greater than or equal to N, and event x TTTs include Event 1x TTTs, Event 2x TTTs, or Event 3x TTTs, detection periodicity is the search period, N and M are numerical values, and maximum threshold and minimum threshold are integer parameters for the cell age pruning threshold.

15. The computer readable medium of claim 12, wherein the serving cell of the apparatus is a Wideband Code Division Multiple Access, WCDMA, cell and wherein the candidate cell is a WCDMA, a Global System for Mobile communication, GSM, cell, or a Long Term Evolution, LTE, cell.

**Patentansprüche**

1. Ein Verfahren (400) für Drahtloskommunikationen, das Folgendes aufweist:

Bestimmen (41), an einer Nutzereinrichtung bzw. UE (UE = user equipment), einer Suchperiode für Messungsereignisse für Zellen in einer Datenbank, die sich von einer versorgenden Zelle der UE unterscheiden, wobei die Suchperiode basierend wenigstens teilweise auf Sendelückenmustersequenz- bzw. TGPS-Information (TGPS = transmission gap pattern sequence) bestimmt wird, die von der versorgenden Zelle empfangen wird;
Auswählen (42) einer Kandidatenzelle aus den Zellen in der Datenbank in der UE, **gekennzeichnet durch**:

Bestimmen (43), an der UE, einer kleinsten Messungsberichtsereignis-TTT (TTT = time-to-trigger bzw. Zeit bis zur Auslösung) aus einer Vielzahl von Messungsberichtsereignis-TTTs, die mit der Kandidatenzelle assoziiert sind;
adaptives Bestimmen (45) eines Zellenalterbeschneidungsschwellenwertes für die Kandidatenzelle basierend wenigstens teilweise auf der Suchperiode und der kleinsten Messungsberichtsereignis-TTT, die mit der Kandidatenzelle assoziiert ist, wobei der Zellenalterbeschneidungsschwellenwert eine maximale Anzahl von aufeinanderfolgenden Zel suchen ist, während denen die Kandidatenzelle durch die UE hätte detektiert werden sollen, jedoch nicht durch die UE detektiert worden ist; und

Entfernen (46) der Kandidatenzelle aus der Datenbank in der UE, wenn der Zellenalterbeschneidungsschwellenwert für die Kandidatenzelle erreicht worden ist.

2. Verfahren nach Anspruch 1, wobei die Zelle in der Datenbank ein oder mehrere benachbarte Zellen der versorgenden Zelle der UE aufweist.

3. Verfahren nach Anspruch 1, wobei der Zellenalterbeschneidungsschwellenwert gemäß dem folgenden Ausdruck bestimmt wird:

Zellenalterbeschneidungsschwellenwert = min {maximaler Schwellenwert, max {minimaler Schwellenwert, ceil (min {Ereignis-x-TTTs}/Detektionsperiodizität)}},

wobei min {N, M} der kleinste Wert von N und M ist, max {N, M} der größte Wert von N und M ist, ceil (N) der nächste ganzzahlige Wert größer als oder gleich N ist und Ereignis-x-TTTs Ereignis-1x-TTTs, Ereignis-2x-TTTs oder Ereignis-3x-TTTs aufweisen, die Detektionsperiodizität die Suchperiode ist, N und M numerische Werte sind und der maximale Schwellenwert und der minimale Schwellenwert ganzzahlige Parameter für den Zellenalterbeschneidungsschwellenwert sind.

4. Verfahren nach Anspruch 1, wobei die versorgende Zelle der UE eine Breitband-Codemultiplex-Vielfachzugriffs- bzw. WCDMA-Zelle (WCDMA = Wideband Code Division Multiple Access) ist.

5. Verfahren nach Anspruch 1, wobei die Kandidatenzelle eine WCDMA-, eine GSM-Zelle (GSM = Global System for Mobile communication) oder eine LTE-Zelle (LTE = Long Term Evolution) ist.

6. Verfahren nach Anspruch 1, wobei das Bestimmen der Suchperiode teilweise auf einem Lückenmuster eines komprimierten Modus für die UE basiert.

7. Eine Vorrichtung (105) für Drahtloskommunikationen, die Folgendes aufweist:

Mittel zum Bestimmen (51), an einer Nutzereinrichtung bzw. UE (UE = user equipment), einer Suchperiode für Messungsereignisse für Zellen in einer Datenbank, die sich von einer versorgenden Zelle der UE unterscheiden, und zwar basierend wenigstens teilweise auf Sendelückenmustersequenz- bzw. TGPS-Information (TGPS = transmission gap pattern sequence), die von der versorgenden Zelle empfangen wird;
Mittel zum Auswählen (53) einer Kandidatenzelle aus den Zellen in der Datenbank in der UE, **gekennzeichnet durch**:

Mittel zum Bestimmen (55), an der UE, einer kleinsten Messungsberichtsereignis-TTT (TTT = time-to-trigger bzw. Zeit bis zur Auslösung) aus einer Vielzahl von Messungsberichtsereignis-TTTs, die mit der Kandidatenzelle in der Datenbank assoziiert sind;
Mittel zum adaptiven Bestimmen (57) eines Zellenalterbeschneidungsschwellenwertes für die Kandidatenzelle basierend wenigstens teilweise auf der Suchperiode und der kleinsten Messungsberichtsereignis-TTT, die mit der Kandidatenzelle assoziiert ist, wobei der Zellenalterbeschneidungsschwellenwert eine maximale Anzahl von aufeinanderfolgenden Suchen ist, während denen die Kandidatenzelle hätte detektiert werden sollen, jedoch nicht durch die UE detektiert worden ist; und Mittel zum Entfernen der Kandidatenzelle aus der Datenbank in der UE, wenn der Zellenalterbeschneidungsschwellenwert für die Kandidatenzelle erreicht worden ist.

8. Vorrichtung nach Anspruch 7, wobei die Zellen in der Datenbank eine oder mehrere benachbarte Zellen der versorgenden Zelle der UE aufweisen.

9. Vorrichtung nach Anspruch 7, wobei der Zellenalterbeschneidungsschwellenwert gemäß dem folgenden Ausdruck bestimmt wird:

Zellenalterbeschneidungsschwellenwert = min {maximaler Schwellenwert,

max {minimaler Schwellenwert, ceil (min {Ereignis-x-

TTTs}/Detektionsperiodizität)}},

wobei min {N, M} der kleinste Wert von N und M ist, max {N, M} der größte Wert von N und M ist, ceil (N) der nächste ganzzahlige Wert größer als oder gleich N ist und Ereignis-x-TTTs Ereignis-1x-TTTs, Ereignis-2x-TTTs oder Ereignis-3x-TTTs aufweisen, die Detektionsperiodizität die Suchperiode ist, N und M numerische Werte sind und der maximale Schwellenwert und der minimale Schwellenwert ganzzahlige Parameter für den Zellenalterbeschneidungsschwellenwert sind.

10. Vorrichtung nach Anspruch 7, wobei die versorgende Zelle der UE eine Breitband-Codemultiplex-Vielfachzugriffs-bzw. WCDMA-Zelle (WCDMA = Wideband Code Division Multiple Access) ist.

11. Vorrichtung nach Anspruch 7, wobei die Mittel zum Bestimmen der Suchperiode wenigstens teilweise auf einem Lückenmuster eines komprimierten Modus für die UE basieren.

12. Ein computerlesbares Medium (106), das von einem Computer ausführbaren Code speichert, der Folgendes aufweist:

Code, um einen Prozessor (104) zu veranlassen zum Bestimmen einer Suchperiode für Messungsereignisse für Zellen in einer Datenbank, die sich von einer versorgenden Zelle der Nutzereinrichtung bzw. UE (UE = user equipment) unterscheiden, basierend wenigstens teilweise auf Sendelückenmustersequenz- bzw. TGPS-Information (TGPS = transmission gap pattern sequence), die von der versorgenden Zelle empfangen wird;
Code, um den Prozessor (104) zu veranlassen zum Auswählen einer Kandidatenzelle aus den Zellen in der Datenbank, **gekennzeichnet durch**:

Code, um den Prozessor (104) zu veranlassen zum Bestimmen einer kleinsten Messungsberichtsereignis-TTT (TTT = time-to-trigger bzw. Zeit bis zur Auslösung) aus einer Vielzahl von Messungsberichtsereignis-TTTs, die mit der Kandidatenzelle assoziiert sind;
Code, um den Prozessor (104) zu veranlassen zum adaptiven Bestimmen eines Zellenalterbeschneidungsschwellenwertes für die Kandidatenzelle basierend wenigstens teilweise auf der Suchperiode und der kleinsten Messungsberichtsereignis-TTT, die mit der Kandidatenzelle assoziiert ist, wobei der Zellenalterbeschneidungsschwellenwert eine maximale Anzahl von aufeinanderfolgenden Suchen ist, innerhalb welcher die Kandidatenzelle hätte detektiert werden sollen, jedoch nicht durch die UE detektiert worden ist; und
Code, um den Prozessor (104) zu veranlassen zum Entfernen der Kandidatenzelle aus der Datenbank in der UE, wenn der Zellenalterbeschneidungsschwellenwert für die Kandidatenzelle erreicht worden ist.

13. Computerlesbares Medium nach Anspruch 12, wobei die Zellen in der Datenbank ein oder mehrere benachbarte Zellen der versorgenden Zelle der UE aufweisen.

14. Computerlesbares Medium nach Anspruch 12, wobei der Zellenalterbeschneidungsschwellenwert gemäß dem folgenden Ausdruck bestimmt wird:

Zellenalterbeschneidungsschwellenwert = min {maximaler Schwellenwert,

max {minimaler Schwellenwert, ceil (min {Ereignis-x-

TTTs}/Detektionsperiodizität)}},

wobei min {N, M} der kleinste Wert von N und M ist, max {N, M} der größte Wert von N und M ist, ceil (N) der nächste ganzzahlige Wert größer als oder gleich N ist und Ereignis-x-TTTs Ereignis-1x-TTTs, Ereignis-2x-TTTs oder Ereignis-3x-TTTs aufweisen, die Detektionsperiodizität die Suchperiode ist, N und M numerische Werte sind und der maximale Schwellenwert und der minimale Schwellenwert ganzzahlige Parameter für den Zellenalterbeschneidungsschwellenwert sind.

15. Computerlesbares Medium nach Anspruch 12, wobei die versorgende Zelle der Vorrichtung eine WCDMA-Zelle (WCDMA = Wideband Code Division Multiple Access) ist und wobei die Kandidatenzelle eine WCDMA-, eine GSM-Zelle (GSM = Global System for Mobile communication) oder eine LTE-Zelle (LTE = Long Term Evolution) ist.

**Revendications**

1. Un procédé (400) de communications sans fil, comprenant :

la détermination (41), au niveau d'un équipement d'utilisateur, UE, d'une période de recherche d'événements de mesure pour des cellules dans une base de données différentes d'une cellule de desserte de l'UE, où la période de recherche est déterminée en fonction au moins en partie d'informations de séquence de motif d'espace de transmission, TGPS, reçues de la cellule de desserte,
la sélection (42) d'une cellule candidate à partir des cellules dans la base de données dans l'UE, **caractérisée par** :

la détermination (43), au niveau de l'UE, d'un temps de déclenchement, TTT, d'événement de rapport de mesure le plus court parmi une pluralité de TTT d'événement de rapport de mesure associés à la cellule candidate,
la détermination adaptative (45) d'un seuil d'élagage d'âge de cellule pour la cellule candidate en fonction au moins en partie de la période de recherche et du TTT d'événement de rapport de mesure le plus court associé à la cellule candidate, où le seuil d'élagage d'âge de cellule est un nombre maximum de recherches de cellule consécutives au cours desquelles la cellule candidate aurait dû être détectée par l'UE mais n'a pas été détectée par l'UE, et
la suppression (46) de la cellule candidate de la base de données dans l'UE lorsque le seuil d'élagage d'âge de cellule pour la cellule candidate a été atteint.

2. Le procédé selon la Revendication 1, où les cellules dans la base de données comprennent une ou plusieurs cellules voisines de la cellule de desserte de l'UE.

3. Le procédé selon la Revendication 1, où le seuil d'élagage d'âge de cellule est déterminé en fonction de l'expression suivante :

$$\text{seuil d'élagage d'âge de cellule} = \min \{\text{seuil maximum}, \max \{\text{seuil minimum},$$

$$\text{fonction plafond} (\min \{\text{événement x TTT}\}/\text{périodicité de détection})\}\},$$

où min {N, M} est le plus petit de N et M, max {N, M} est le plus grand de N et M, fonction plafond (N) est la valeur entière la plus proche supérieure ou égale à N, et des événements x TTT comprennent Événement 1x TTT, Événement 2x TTT ou Événement 3x TTT, périodicité de détection est la période de recherche, N et M sont des valeurs numériques, et seuil maximum et seuil minimum sont des paramètres d'entiers pour le seuil d'élagage d'âge de cellule.

4. Le procédé selon la Revendication 1, où la cellule de desserte de l'UE est une cellule à accès multiple par répartition de code à large bande, WCDMA.

5. Le procédé selon la Revendication 1, où la cellule candidate est une cellule WCDMA, une cellule de système mondial de communications mobiles, GSM, ou une cellule de technologie d'évolution à long terme, LTE.

6. Le procédé selon la Revendication 1, où la détermination de la période de recherche est basée en partie sur un motif d'espace en mode compressé pour l'UE.

7. Un appareil (105) de communications sans fil, comprenant :

un moyen de détermination (51), au niveau d'un équipement d'utilisateur, UE, d'une période de recherche d'événements de mesure pour des cellules dans une base de données différentes d'une cellule de desserte de l'UE, en fonction en partie d'informations de séquence de motif d'espace de transmission, TGPS, reçues de la cellule de desserte,

un moyen de sélection (53) d'une cellule candidate à partir des cellules dans la base de données dans l'UE, **caractérisé par** :

un moyen de détermination (55), au niveau de l'UE, d'un temps de déclenchement, TTT, d'événement de rapport de mesure le plus court parmi une pluralité de TTT d'événement de rapport de mesure associés à la cellule candidate dans la base de données,

un moyen de détermination adaptative (57) d'un seuil d'élagage d'âge de cellule pour la cellule candidate en fonction au moins en partie de la période de recherche et du TTT d'événement de rapport de mesure le plus court associé à la cellule candidate, où le seuil d'élagage d'âge de cellule est un nombre maximum de recherches consécutives au cours desquelles la cellule candidate aurait dû être détectée mais n'a pas été détectée par l'UE, et

un moyen de suppression de la cellule candidate de la base de données dans l'UE lorsque le seuil d'élagage d'âge de cellule pour la cellule candidate a été atteint.

8. L'appareil selon la Revendication 7, où les cellules dans la base de données comprennent une ou plusieurs cellules voisines de la cellule de desserte de l'UE.

9. L'appareil selon la Revendication 7, où le seuil d'élagage d'âge de cellule est déterminé en fonction de l'expression suivante :

$$\text{seuil d'élagage d'âge de cellule} = \min \{\text{seuil maximum, max \{seuil minimum,}}$$

$$\text{fonction plafond (min \{événement x TTT\}/périodicité de détection)}\}\},$$

où min {N, M} est le plus petit de N et M, max {N, M} est le plus grand de N et M, fonction plafond (N) est la valeur entière la plus proche supérieure ou égale à N, et des événements x TTT comprennent Événement 1x TTT, Événement 2x TTT ou Événement 3x TTT, périodicité de détection est la période de recherche, N et M sont des valeurs numériques, et seuil maximum et seuil minimum sont des paramètres d'entiers pour le seuil d'élagage d'âge de cellule.

10. L'appareil selon la Revendication 7, où la cellule de desserte de l'UE est une cellule à accès multiple par répartition de code à large bande, WCDMA.

11. L'appareil selon la Revendication 7, où le moyen de détermination de la période de recherche est basé en partie sur un motif d'espace en mode compressé pour l'UE.

12. Un support lisible par ordinateur (106) conservant en mémoire du code exécutable par ordinateur, comprenant :

du code destiné à amener un processeur (104) à déterminer une période de recherche d'événements de mesure pour des cellules dans une base de données différentes d'une cellule de desserte d'un équipement d'utilisateur, UE, en fonction au moins en partie d'informations de séquence de motif d'espace de transmission, TGPS, reçues de la cellule de desserte,

du code destiné à amener le processeur (104) à sélectionner une cellule candidate à partir des cellules dans la base de données, **caractérisé par** :

du code destiné à amener le processeur (104) à déterminer un temps de déclenchement, TTT, d'événement de rapport de mesure le plus court parmi une pluralité de TTT d'événement de rapport de mesure associés à la cellule candidate,

du code destiné à amener le processeur (104) à déterminer de manière adaptative un seuil d'élagage d'âge de cellule pour la cellule candidate en fonction au moins en partie de la période de recherche et du TTT d'événement de rapport de mesure le plus court associé à la cellule candidate, où le seuil d'élagage d'âge de cellule est un nombre maximum de recherches consécutives à l'intérieur desquelles la cellule candidate aurait dû être détectée mais n'a pas été détectée par l'UE, et

du code destiné à amener le processeur (104) à supprimer la cellule candidate de la base de données dans l'UE lorsque le seuil d'élagage d'âge de cellule pour la cellule candidate a été atteint.

13. Le support lisible par ordinateur selon la Revendication 12, où les cellules dans la base de données comprennent une ou plusieurs cellules voisines de la cellule de desserte de l'UE.

14. Le support lisible par ordinateur selon la Revendication 12, où le seuil d'élagage d'âge de cellule est déterminé en fonction de l'expression suivante :

$$\text{seuil d'élagage d'âge de cellule} = \min \{\text{seuil maximum, max \{seuil minimum,}}$$

$$\text{fonction plafond (min \{événement x TTT\}/périodicité de détection)\}\},}$$

où min {N, M} est le plus petit de N et M, max {N, M} est le plus grand de N et M, fonction plafond (N) est la valeur entière la plus proche supérieure ou égale à N, et des événements x TTT comprennent Événement 1x TTT, Événement 2x TTT, ou Événement 3x TTT, périodicité de détection est la période de recherche, N et M sont des valeurs numériques et seuil maximum et seuil minimum sont des paramètres d'entiers pour le seuil d'élagage d'âge de cellule.

15. Le support lisible par ordinateur selon la Revendication 12, où la cellule de desserte de l'appareil est une cellule à accès multiple par répartition de code à large bande, WCDMA, et où la cellule candidate est une cellule WCDMA, une cellule de système mondial de communications mobiles, GSM, ou une cellule de technologie d'évolution à long terme, LTE.

15

15

13

210

105

UE

105

Cell Pruning Component

51

Search Period Determination Component

53

Selection Component

55

TTT Determination Component

57

Threshold Determination Component

*FIG. 1*

400

41

Determine a search period for measurement events for cells in a database different from a serving cell of a user equipment (UE), based at least in part on transmission gap pattern sequence (TGPS) received from the serving cell

42

Select a candidate cell from the cells in the database in the UE

43

Determine a smallest measurement reporting event time-to-trigger (TTT) among a plurality of the measurement reporting event TTTs associated with the candidate cell

44

Determine signal strength of the serving cell and the candidate cell

45

Adaptively determine a cell age pruning threshold for the candidate cell based at least in part on the search period and the smallest measurement reporting event TTT associated with the candidate cell, wherein the cell age pruning threshold is a maximum number of consecutive searches within which the candidate cell should have been detected but was not detected by the UE

46

Remove the candidate cell from the database, when the cell age pruning threshold for the candidate cell has been reached, wherein the cells in the database comprise one or more neighboring cells of the serving cell of the UE.

FIG. 2

*FIG. 3*

**FIG. 4**

**FIG. 5**

EP 3 105 962 B1

**FIG. 6**

400

404                                    402

←———Control-plane———→  ←———User-plane———→

410

L3

415
RRC

Radio Bearers

413
PDCP

408

L2

411
RLC

Logical Channels

409
MAC

Transport Channels

406    L1

407
Physical Layer

## FIG. 7

**FIG. 8**

EP 3 105 962 B1

**EP 3 105 962 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014029483 A1

- US 2013258913 A1